# EUROPÄISCHE PATENTSCHRIFT

(11) **EP 1 062 125 B1**
(45) Veröffentlichungstag und Bekanntmachung des Hinweises auf die Patenterteilung: **20.02.2002**
(21) Anmeldenummer: 98966380.2
(22) Anmeldetag: 18.12.1998
(51) Int. Cl.: B60R 21/16

(54) **GASSACK FÜR EIN FAHRZEUGINSASSEN-RÜCKHALTESYSTEM**
AIRBAG FOR AN OCCUPANT RESTRAINT SYSTEM
COUSSIN GONFLABLE POUR SYSTEME DE RETENUE DES PASSAGERS D'UN VEHICULE

(30) Priorität: 10.03.1998 DE 29804239 U
(43) Veröffentlichungstag der Anmeldung: 27.12.2000
(73) Patentinhaber: TRW Occupant Restraint Systems GmbH & Co. KG, 73553 Alfdorf (DE)
(72) Erfinder: ELLERBROK, Norbert, D-73553 Alfdorf (DE); HEILIG, Alexander, D-73550 Wissgoldingen (DE)
(74) Vertreter: Degwert, Hartmut, Dipl.-Phys.
(86) Internationale Anmeldenummer: EP9808350
(87) Internationale Veröffentlichungsnummer: WO9946150

(56) Entgegenhaltungen:
- EP-A- 0 495 409
- EP-A- 0 553 542
- EP-A- 0 803 407
- WO-A-90/09295
- DE-A- 2 030 863
- DE-A- 19 643 052
- DE-U- 29 713 111
- GB-A- 2 257 950
- GB-A- 2 257 952
- GB-A- 2 314 298
- US-A- 5 584 508

## Beschreibung

Die Erfindung betrifft einen Gassack für ein Fahrzeuginsassen-Rückhaltesystem, mit einer Einblasöffnung und einer Wandung. Solche Gassäcke werden bei einer Fahrzeugkollision innerhalb weniger Millisekunden durch das von einem Gasgenerator bereitgestellte Gas aufgeblasen und dienen dem Insassen als Aufprallkissen.

Bei herkömmlichen Gassäcken bestand oft der Nachteil, daß sie nur unzureichend an die Leistung des Gasgenerators angepaßt waren. Die ausgestoßene Gasmenge kann in weiten Bereichen variieren, was in den Extremfällen zu nicht ausreichender Befüllung bzw. zum Gassackriß führen kann. Außerdem sind derartige Gassäcke oft nur auf einen Fahrzeuginsassen von durchschnittlicher Größe und durchschnittlichem Gewicht abgestimmt. Für einen optimalen Insassenschutz ist es aber notwendig, daß sich die Härte des Gassacks an die kinetische Energie des jeweiligen Insassen anpaßt. So sollte beispielsweise im Vergleich zum Aufprall eines leichten Insassen der Gassack für einen vergleichsweise schweren Insassen zusätzliche Möglichkeiten zum Kompensieren der kinetischen Energie bieten, um den Rückschlag des Insassen aus dem Gassack bestmöglich zu verringern.

Aus der DE-A-20 30 863 ist ein Gassack mit einer Einblasöffnung und einer Wandung bekannt, bei dem die Wandung über ihre Oberfläche verteilt Bereiche aufweist, die durch einen Entfaltungsvorgang bei steigendem Gassack-Innendruck das Volumen des Gassacks vergrößern.

EP-A-0 803 407, EP-A-0 553 542 und GB-A-2 257 950 zeigen weitere Ausführungsbeispiele für Falten in Airbags.

Die WO-A-9009295 zeigt einen Gassack, bei dem Fangbänder, die aus im Vergleich zum restlichen Gassackgewebe stärkeren Fäden gebildet sind, an bestimmten Stellen mit der Gassackwandung verwebt sind. Da das Gewebe der Gassackwandung im Gegensatz zu den Fäden der Fangbänder vorgeschrumpft ist, kann mit den Fangbändern eine kontrollierte Dehnung des Gassacks erreicht werden.

Die Erfindung schafft einen Gassack, der sich besser an die Art der Belastung anpaßt. Indem das Volumen und damit die Härte des Gassacks entsprechend der Belastung individuell eingestellt wird, kann sich der Gassack an verschiedene Unfallsituationen genauso wie an verschiedene Gasgeneratorleistungen anpassen.

Zu diesem Zweck ist bei einem gattungsgemäßen Gassack, wie er aus der genannten DE-A-20 30 863 bekannt ist, gemäß einem ersten Aspekt der Erfindung vorgesehen, daß die Wandung Falten aufweist, die durch Einschnürungen der Wandungsbereiche gebildet sind.

Gemäß einem zweiten Aspekt der Erfindung bestehen die Bereiche der Wandung aus textilem Gewebe, das Reißfäden und darin eingewebte Schlaufen aufweist.

Gemäß einem dritten Aspekt der Erfindung bestehen die Bereiche der Wandung aus welligem Material.

Aus der erfindungsgemäßen Ausbildung des Gassacks ergibt sich als Vorteil, daß die Gefahr eines Gassackrisses bei extrem hohen Temperaturen und der damit verbundenen stärkeren Expansion des vom Gasgenerator zum Aufblasen des Gassacks erzeugten Gases durch die Möglichkeit, den Überdruck durch das Bereitstellen von zusätzlichem Volumen auszugleichen, vermindert wird. Dadurch kann das Gassackvolumen verringert werden, so daß auch bei extrem niederen Temperaturen der Gassack ausreichend gefüllt ist, um dem Insassen Schutz zu bieten.

Weitere Merkmale und Vorteile der Erfindung ergeben sich aus der nachfolgenden Beschreibung und aus der Zeichnung, auf die Bezug genommen wird. In der Zeichnung zeigen:
- Figur 1a eine erste Ausführungsform eines Gassacks;
- Figur 1b eine schematische Seitenansicht eines abgenähten Wandungsbereichs gemäß einer ersten Variante;
- Figur 2a eine zweite Ausführungsform eines Gassacks;
- Figur 2b eine schematische Seitenansicht eines abgenähten Wandungsbereichs gemäß einer zweiten Variante;
- Figur 3a eine dritte Ausführungsform eines Gassacks;
- Figur 3b eine schematische Seitenansicht eines abgenähten Wandungsbereichs gemäß einer dritten Variante;
- Figur 3c einen abgenähten Wandungsbereich analog Fig. 3b, jedoch auf eine erste Art gestülpt;
- Figur 3d einen abgenähten Wandungsbereich analog Fig. 3b, jedoch auf eine zweite Art gestülpt;
- Figur 4 eine vierte Ausführungsform eines Gassacks;
- Figur 5a eine fünfte Ausführungsform eines Gassacks;
- Figur 5b eine schematische Seitenansicht eines eingeschnürten Wandungsbereichs;
- Figur 6a eine sechste Ausführungsform eines Gassacks;
- Figur 6b eine schematische Seitenansicht eines Wandungsbereichs mit eingewebten Schlaufen; und
- Figur 7 eine siebte Ausführungsform eines Gassacks.

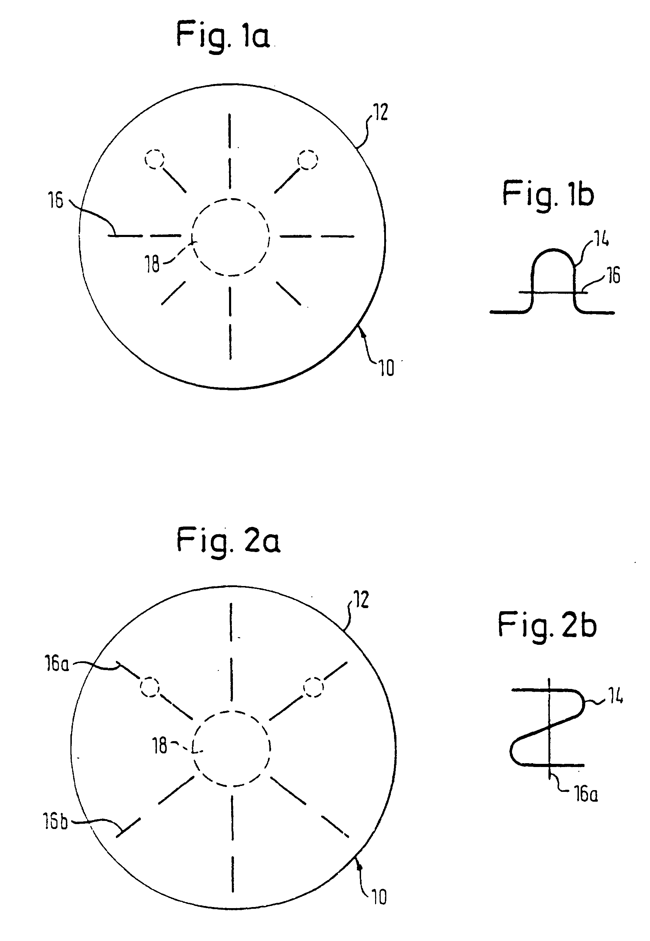

Figur 1a zeigt eine Draufsicht eines aufgeblasenen Gassacks gemäß einer ersten Ausführungsform. Der Gassack 10 weist innseitig auf dem dem Fahrzeuginsassen zugewandten Teil der Wandung 12 mehrere abgenähte Wandungsbereiche 14 auf. Die Nähte 16, die jeweils radial zur Einblasöffnung 18 des Gassacks 10 verlaufen, sind als Reißnähte ausgebildet, die bei einem bestimmten Innendruck des Gassacks 10 aufgetrennt werden. Dabei hängt es von der Art des Aufpralls ab, ob bzw. welche Reißnähte 16 aufgetrennt werden. Schlägt beispielsweise ein vergleichsweise leichter Insasse auf den Gassack 10 auf, so werden weniger Reißnähte 16 geöffnet als bei einem ebenso harten Aufprall eines schweren Insassen. Außerdem bestimmt auch der Ort des Aufpralls, welche Reißnähte 16 aufgetrennt werden. Des weiteren kann sich der Gassack 10 an die Leistung des Gasgenerators anpassen, indem entsprechend der Expansion und damit dem Druck des bereitgestellten Gases Reißnähte 16 geöffnet werden und damit das Volumen des Gassacks 10 vergrößert wird.

In Figur 1b ist schematisch ein abgenähter Wandungsbereich 14 des Gassacks 10 aus Figur 1 a dargestellt. Bei dieser Ausführungsform, wie auch bei allen nachfolgend beschriebenen, weisen die durch das Abnähen gebildeten Falten der Gassackwandung 12 in das Gassackinnere, damit der Fahrzeuginsasse beim Eindringen in den Gassack 10 nicht mit den Falten in Berührung kommt; weiterhin können die Reißnähte 16 zusätzlich verriegelt sein.

Die in Figur 2a dargestellte zweite Ausführungsform unterscheidet sich von der ersten dadurch, daß für die Reißnähte 16a, 16b abwechselnd Fäden unterschiedlicher Stärke verwendet werden. Die mit 16a bezeichneten Nähte sind mit Fäden größerer Stärke gebildet, die eine höhere Reißkraft aufweisen als die in den mit 16b bezeichneten Nähten verwendeten Fäden geringerer Stärke. Alternativ zu der in Figur 1b dargestellten Methode können die Wandungsbereiche 14 des Gassacks 10 auch wie in Figur 2b gezeigt abgenäht sein.

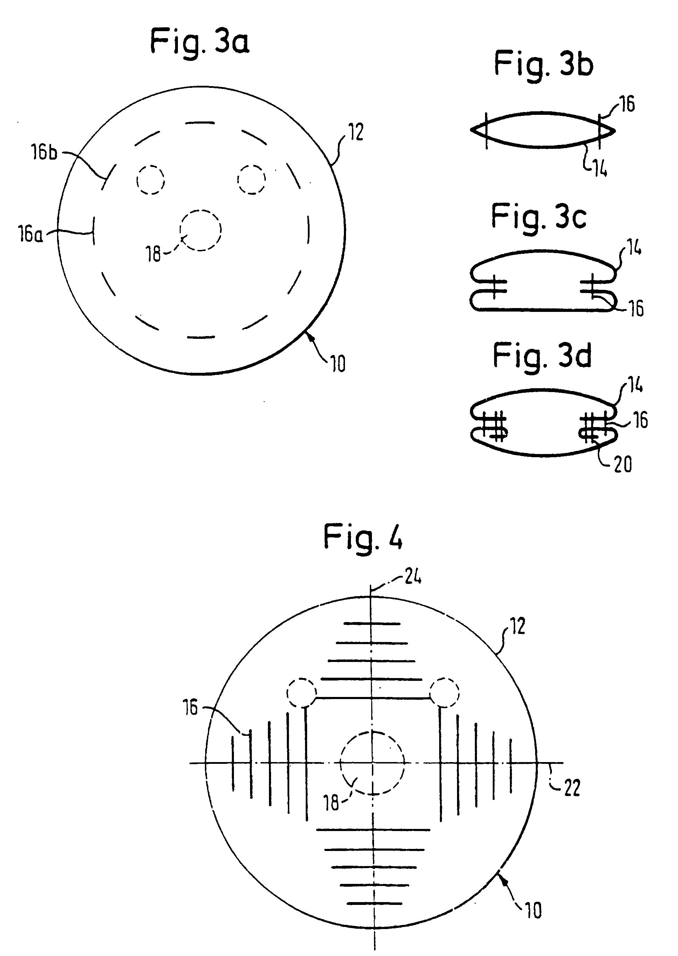

Der Gassack 10 in Figur 3a weist Reißnähte 16a, 16b auf, die auf einem konzentrischen Kreis um die Einblasöffnung 18 verlaufen. Für die Reißnähte 16a, 16b können Fäden gleicher Stärke oder abwechselnd stärkere und schwächere Fäden verwendet werden. Einen abgenähten Wandungsbereich 14 des Gassacks 10 aus Figur 3a zeigt Figur 3b. Es besteht auch die Möglichkeit, den Wandungsbereich vor dem Abnähen umzustülpen. Die Figuren 3c und 3d zeigen zwei derartige Varianten. Bei der letzteren sind Nahtanfang und -ende zusätzlich durch zwei Stiche 20 verriegelt.

Eine vierte Ausführungsform eines Gassacks 10 ist in Figur 4 dargestellt. Hier sind die Nähte 16 auf vier innenseitige Bereiche des dem Insassen zugewandten Teil der Gassackwandung 12 verteilt. In den einzelnen Bereichen verlaufen die Nähte 16 geradlinig und parallel zueinander, wobei sie senkrecht auf den Symmetrieachsen 22 bzw. 24 stehen. Die Nähte 16 eines Bereichs verlaufen jeweils senkrecht zu denen des angrenzenden Bereichs.

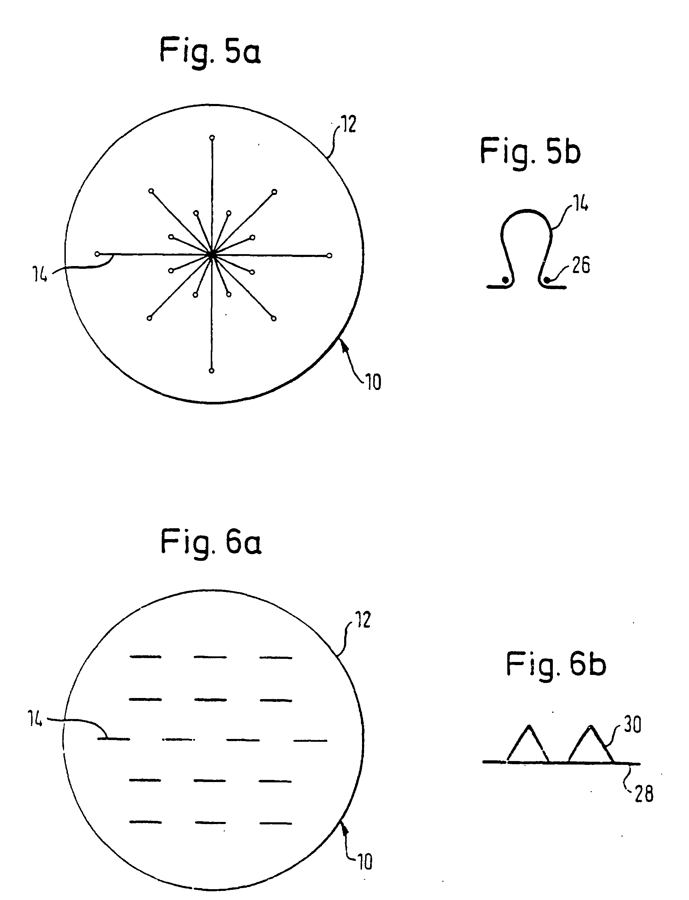

Figur 5a zeigt einen Gassack 10, dessen Wandung 12 eine Vielzahl an Falten aufweist. Diese Falten sind durch Einschnürungen bestimmter Wandungsbereiche 14 gebildet, wie in Figur 5b zu sehen ist. Dabei wird jede Falte dreifach mit einem Faden 26 umschlungen und anschließend fest verknotet oder vernäht. Der Faden kann auch verknotet und zusätzlich vernäht sein. Die Wirkung dieser Einschnürungen entspricht der der Reißnähte 16 in den vorher beschriebenen Ausführungsformen. Bei entsprechender Belastung reißt der Faden 26 bzw. die Naht, und die Falte wird freigegeben.

Der in Figur 6a abgebildete Gassack 10 weist mehrere Wandungsbereiche 14 mit einer speziellen Gewebestruktur auf, die in Figur 6b im Querschnitt gezeigt ist. In durchgehende Reißfäden 28 sind Schlaufen 30 eingewebt, die in das Gassackinnere weisen. Die Reißfäden 28 sind dabei von geringerer Stärke als die Fäden der Schlaufen 30. Bei Einwirkung einer Kraft, die groß genug ist, die Reißfäden 28 zum Reißen zu bringen, werden die reißfesten Schlaufen 30 freigegeben. Bei entsprechendem Überdruck im Gassackinneren wird das Gewebe somit nicht zerstört, sondern das Volumen des Gassacks 10 wird durch das definierte Aufreißen der Reißfäden 14, analog zu den oben beschriebenen Ausführungsformen, vergrößert. Die Reißfäden 28 können von unterschiedlicher Stärke sein.

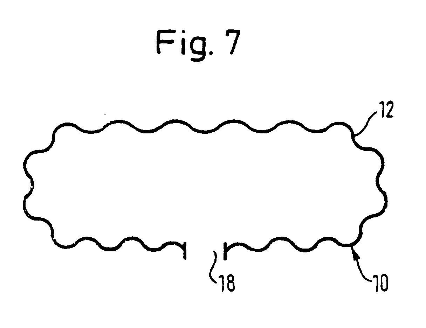

Figur 7 zeigt schließlich eine siebte Ausführungsform eines Gassacks 10. Bei dieser Version sind Ober- und Unterseite der Wandung 12 aus einem Materialzuschnitt gebildet, der wellig ist. Die Filamente des Gewebes sind nicht verstreckt, so daß sie um bis zu ca. 100% gedehnt werden können. Ein aus solchen Fäden gewebter Gassack 10 bleibt bei einem relativ geringen Gassausstoß des Gasgenerators oder einem leichten Aufprall eines Fahrzeuginsassen wellig, während seine Oberfläche bei einem vergleichsweise hohen Ausstoß oder einem harten Aufprall glatt wird, verbunden mit einer entsprechenden Volumenvergrößerung des Gassacks 10.

## Patentansprüche

1. Gassack für ein Fahrzeuginsassen-Rückhaltesystem,mit einer Einblasöffnung (18) und einer Wandung (12), bei dem die Wandung (12) über ihre Oberfläche verteilt Bereiche (14) aufweist, die durch einen Entfaltungs- oder Glättungsvorgang bei steigendem Gassack-Innendruck das Volumen des Gassacks (10) vergrößern, **dadurch gekennzeichnet, daß** die Wandung (12) Falten aufweist, die durch Einschnürungen der Wandungsbereiche (14) gebildet sind.

2. Gassack nach Anspruch 1, **dadurch gekennzeichnet, daß** die Einschnürungen durch Umschlingen der Bereiche (14) mit einem Faden (26) gebildet sind.

3. Gassack nach Anspruch 2, **dadurch gekennzeichnet, daß** der Faden (26) verknotet und/oder vernäht ist.

4. Gassack für ein Fahrzeuginsassen-Rückhaltesystem, mit einer Einblasöffnung (18) und einer Wandung (12), bei dem die Wandung (12) über ihre Oberfläche verteilt Bereiche (14) aufweist, die durch einen Entfaltungs- oder Glättungsvorgang bei steigendem Gassack-Innendruck das Volumen des Gassacks (10) vergrößern, **dadurch gekennzeichnet, daß** die Bereiche (14) der Wandung (12) aus textilem Gewebe bestehen, wobei das Gewebe in Reißfäden (28) eingewebte Schlaufen (30) aufweist.

5. Gassack nach Anspruch 4, **dadurch gekennzeichnet**, das das Gewebe Reißfäden (28) unterschiedlicher Stärke aufweist.

6. Gassack für ein Fahrzeuginsassen-Rückhaltesystem, mit einer Einblasöffnung (18) und einer Wandung (12), bei dem die Wandung (12) über ihre Oberfläche verteilt Bereiche (14) aufweist, die durch einen Entfaltungs- oder Glättungsvorgang bei steigendem Gassack-Innendruck das Volumen des Gassacks (10) vergrößern, **dadurch gekennzeichnet, daß** die Bereiche (14) der Wandung (12) aus welligem Material bestehen.

7. Gassack nach Anspruch 6, **dadurch gekennzeichnet, daß** das wellige Material aus textilem Gewebe gebildet ist, dessen Filamente nicht verstreckt sind.

## Claims

1. A gas bag for a vehicle occupant restraint system, comprising an inflation port (18) and a wall (12), in which said wall (12) comprises portions (14) distributed over its surface area which, with increasing gas bag internal pressure, increase the volume of said gas bag (10) by a deployment or smoothing action, **characterized in that** said wall (12) comprises folds formed by constrictions of said wall portions (14).

2. The gas bag as set forth in claim 1, **characterized in that** said constrictions are formed by looping a thread (26) around said portions (14).

3. The gas bag as set forth in claim 2, **characterized in that** said thread (26) is knotted and/or sewn up.

4. A gas bag for a vehicle occupant restraint system, comprising an inflation port (18) and a wall (12), in which said wall (12) comprises portions (14) distributed over its surface area which, with increasing gas bag internal pressure, increase the volume of said gas bag (10) by a deployment or smoothing action, **characterized in that** said portions (14) of said wall (12) consist of a textile fabric, said fabric comprising tear threads (28) with loops (30) woven therein.

5. The gas bag as set forth in claim 4, **characterized in that** said fabric comprises tear threads (28) of differing thickness.

6. A gas bag for a vehicle occupant restraint system, comprising an inflation port (18) and a wall (12), in which said wall (12) comprises portions (14) distributed over its surface area which, with increasing gas bag internal pressure, increase the volume of said gas bag (10) by a deployment or smoothing action, **characterized in that** said portions (14) of said wall (12) consist of a corrugated material.

7. The gas bag as set forth in claim 6, **characterized in that** said corrugated material is formed of a textile fabric, the filaments of which are in a non-stretched condition.

## Revendications

1. Coussin à gaz pour un système de retenue d'occupants d'un véhicule, comprenant un orifice d'insufflation (18) et une paroi (12), dans lequel la paroi (12) présente des zones (14) réparties sur sa surface, qui agrandissent le volume intérieur du coussin à gaz (10) par un processus de déploiement ou de lissage lorsque la pression intérieure du coussin à gaz augmente, **caractérisé en ce que** la paroi (12) présente des plis qui sont formés par des étranglements des zones de paroi (14).

2. Coussin à gaz selon la revendication 1, **caractérisé en ce que** les étranglements sont formées en entourant les zones (14) au moyen d'un fil.

3. Coussin à gaz selon la revendication 2, **caractérisé en ce que** le fil (26) est noué et/ou cousu.

4. Coussin à gaz pour un système de retenue d'occupants d'un véhicule, comprenant un orifice d'insufflation (18) et une paroi (12), dans lequel la paroi (12) présente des zones (14) réparties sur sa surface, qui agrandissent le volume intérieur du coussin à gaz (10) par un processus de déploiement ou de lissage lorsque la pression intérieure du coussin à gaz augmente, **caractérisé en ce que** les zones (14) de la paroi (12) sont en tissu textile, le tissu présentant des boucles (30) tissées dans des fils d'arrachage (28).

5. Coussin à gaz selon la revendication 4. **caractérisé en ce que** le tissu présente des fils d'arrachage (28) de différentes épaisseurs.

6. Coussin à gaz pour un système de retenue d'occupants d'un véhicule, comprenant un orifice d'insufflation (18) et une paroi (12), dans lequel la paroi (12) présente des zones (14) réparties sur sa surface, qui agrandissent le volume intérieur du coussin à gaz (10) par un processus de déploiement ou de lissage lorsque la pression intérieure du coussin à gaz augmente, **caractérisé en ce que** les zones (14) de la paroi (12) sont en matériau ondulé.

7. Coussin à gaz selon la revendication 6, **caractérisé en ce que** le matériau ondulé est formé par un tissu textile dont les filament ne sont pas étirés.
